# EUROPÄISCHE PATENTSCHRIFT

(11) **EP 1 490 436 B1**
(45) Veröffentlichungstag und Bekanntmachung des Hinweises auf die Patenterteilung: **13.02.2008**
(21) Anmeldenummer: 03714824.4
(22) Anmeldetag: 14.03.2003
(51) Int. Cl.: C08L 69/00, C08K 3/34, C08K 5/523

(54) **SCHLAGZÄHMODIFIZIERTE POLYCARBONAT-ZUSAMMENSETZUNG, ENTHALTEND KALZINIERTEN TALK**
POLYCARBONATE COMPOSITION WITH MODIFIED SHOCK RESISTANCE, CONTAINING CALCINED TALC
COMPOSITION DE POLYCARBONATE RENFERMANT DU TALC CALCINE DESTINEE A MODIFIER LA RESISTANCE AU CHOC

(30) Priorität: 26.03.2002 DE 10213431
(43) Veröffentlichungstag der Anmeldung: 29.12.2004
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE)
(86) Internationale Anmeldenummer: PCT/EP2003/002683
(87) Internationale Veröffentlichungsnummer: WO 2003/080727

(56) Entgegenhaltungen:
- WO-A-02/055526
- DE-A- 19 962 930
- PATENT ABSTRACTS OF JAPAN vol. 1996, no. 04, 30. April 1996 (1996-04-30) -& JP 07 316411 A (MITSUBISHI CHEM CORP), 5. Dezember 1995 (1995-12-05)
- PATENT ABSTRACTS OF JAPAN vol. 1997, no. 10, 31. Oktober 1997 (1997-10-31) -& JP 09 143353 A (SUMIKA A B S LATEX KK), 3. Juni 1997 (1997-06-03)

## Beschreibung

Die Erfindung betrifft eine mit kalziniertem Talk ausgerüstete schlagzähmodifizierte Polymer-Zusammensetzung mit verbesserten mechanischen Eigenschaften und Farbstabilität sowie aus der Zusammensetzung hergestellte Formkörper.

Es ist bekannt, dass zur Erhöhung der Steifigkeit und Zugfestigkeit, zur Erhöhung der Dimensionsstabilität bei Temperaturschwankungen und zur Verbesserung der Oberflächeneigenschaften von Polycarbonat-Zusammensetzungen Talk als Verstärkungsstoff zugesetzt werden kann. In flammwidrigen Materialien dient der Talkzusatz auch als Flammschutzsynergist.

WO 00/148 074 beschreibt mit Talk gefüllte flammwidrige und schlagzähmodifizierte Polycarbonatzusammensetzungen. Kalzinierter Talk wird nicht erwähnt.

In JP-A 0 731 6411 werden PC/ABS-Formmassen beschrieben, die als Flammschutzmittel 1 bis 30 % eines aromatischen Monophosphats und als Füllstoff 1 bis 20 % eines kalzinierten Talks mit einem mittleren Partikeldurchmesser von 2 µm oder kleiner enthalten. Die Formmassen zeichnen sich durch gute Verarbeitbarkeit, Zähigkeit und Wärmeformbeständigkeit sowie einen exzellenten Flammschutz aus. Die Erfahrung lehrt jedoch, dass Monophosphate zum Ausbluten sowie zur unerwünschten Bildung von Werkzeugbelägen bei der Spritzgussverarbeitung neigen.

Aus der WO 98/51737 A1 sind PC/SAN-Blends mit polystyrolgepfropftem Polybutadienkautschuk als Schlagzähmodifikator bekannt, die mineralische Füllstoffe, z.B. Talk enthalten. Der Einsatz kalzinierten Talks wird nicht beschrieben. Die beschriebenen Formmassen sind nicht flammwidrig ausgerüstet.

In der US-A 5 162 419 werden PC/ABS Formmassen beschrieben, die zur Verbesserung des Oberflächenaussehens spritzgegossener Fertigteile Talk mit einer mittleren Teilchengröße von 1,5 bis 20 µm, vorzugsweise 4,0 bis 10 µm, enthalten. Die beschriebenen Formmassen zeichnen sich durch eine matte Oberfläche und verbesserte mechanische Eigenschaften aus und sind nicht flammwidrig ausgerüstet.

Aus der JP-A 11/199768 sind flammwidrige, Talk und Phosphorsäureester enthaltende PC/ABS-Zusammensetzungen bekannt. Die beschriebenen PC/ABS-Zusammensetzungen weisen ein verbessertes Brandverhalten auf und eignen sich insbesondere für Dünnwandapplikationen. Formmassen mit kalzinierten Talktypen werden nicht beschrieben

Die EP-A 0 758 003 A2 beschreibt PC-Formmassen, die als Verstärkungsstoff anorganische Füllstoffe enthalten können. Als Füllstoff wird u.a. Talk angegeben. Die PC-Formmassen können ferner flammwidrig ausgerüstet sein und zeichnen sich durch ein verbessertes Oberflächenaussehen und ein hohes Elastizitätsmodul aus. Polycarbonat-Blends werden in dieser Schrift nicht beschrieben.

In EP-A 0 391 413 werden PC/ABS-Formmassen, enthaltend anorganische Füllstoffe mit speziellen geometrischen Eigenschaften beschrieben, wobei die Formmassen durch einen geringeren linearen thermischen Ausdehnungskoeffizienten, eine hohe Zähigkeit bei Stoßbeanspruchung sowie eine hohe Wärmeformbeständigkeit spezifiziert werden. Als erfindungsgemäße Füllstoffe werden nicht-kalzinierte Talk- und Tonmaterialien beschrieben. Flammschutzmittel werden lediglich allgemein in einer Reihe von Zusatzstoffen erwähnt.

Nachteilig an den aus dem Stand der Technik bekannten talkhaltigen PC/ABS-Blends ist, dass durch den Talkzusatz wichtige mechanische Eigenschaften wie die Bindenahtfähigkeit und Zähigkeit maßgeblich verschlechtert werden. Hinzu kommt insbesondere bei nicht hochreinen Talktypen eine Verschlechterung der Materialeigenfarbe und der Alterungsstabilität, insbesondere der Farbstabilität der Zusammensetzungen bei UV-Belichtung.

Wünschenswert ist es somit, Polycarbonat-Zusammensetzungen bereitzustellen, denen in bekannter Weise zwecks Verbesserung mindestens einer Materialeigenschaft Talk zugesetzt ist, die sich durch eine vorteilhafte Kombination von Bindenahtfestigkeit und Farbstabilität auszeichnen und eine ausgezeichnete Flammwidrigkeit besitzen.

Es wurde nun überraschend gefunden, dass schlagzähmodifizierte Polycarbonatformmassen, die einen kalzinierten Talk und einen oligomeren Phosphorsäureester als Flammschutzmittel enthalten, das gewünschte Eigenschaftsprofil aufweisen.

Gegenstand der Erfindung sind daher mit Pfropfpolymerisat modifizierte Polycarbonat-Formmassen enthaltend oligomere Phosphorsäureester der Formel (Ia), 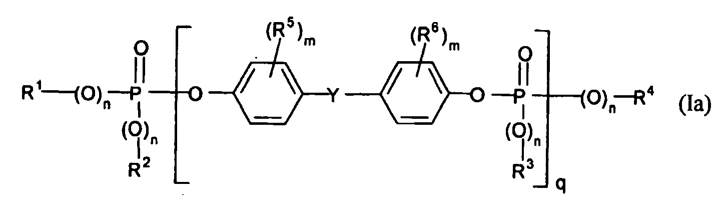 worin
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
- n: unabhängig voneinander, 0 oder 1
- q: 0,8 bis 30 und
- m: unabhängig voneinander 0, 1, 2, 3 oder 4,
- R⁵ und R⁶: unabhängig voneinander C₁ bis C₄-Alkyl, vorzugsweise Methyl oder Ethyl und
- Y: C₁ bis C₇-Alkyliden, C₁-C₇-Alkylen, -O-, -S-, -SO₂ oder -CO-, vorzugsweise Isopropyliden oder Methylen, bedeuten.
und kalzinierten Talk.

Bevorzugt sind thermoplastische Formmassen enthaltend
A) 40 bis 99, vorzugsweise 50 bis 90 Gew.-Teile, besonders bevorzugt 60 bis 80 Gew.-Teile aromatisches Polycarbonat und/oder Polyestercarbonat
B) 0,5 bis 60, vorzugsweise 1 bis 40, insbesondere 2 bis 25 Gew.-Teile Pfropfpolymerisat von
   B.1) 5 bis 95, vorzugsweise 30 bis 90 Gew.-% eines oder mehrerer Vinylmonomeren auf
   B.2) 95 bis 5, vorzugsweise 70 bis 10 Gew.-% einer oder mehrerer Pfropfgrundlagen mit einer Glasumwandlungstemperatur <10°C, vorzugsweise <0°C, besonders bevorzugt < -20°C,
C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate.
D) 0,5 bis 20 Gew.-Teilen, bevorzugt 1 bis 18 Gew.-Teilen, besonders bevorzugt 2 bis 16 Gew.-Tellen oligomer phosphorhaltige Verbindungen der oben angegebenen Formel (I)
E) 0,2 bis 20 Gew.-Teilen, vorzugsweise 0,5 bis 15, insbesondere 0,8 bis 12 Gew.-Teile kalzinierten Talk und
F) 0 bis 5, bevorzugt 0,1 bis 1, insbesondere 0,1 bis 0,5 Gew.-Teile eines Antitropfmittels, bevorzugt eines fluorierten Polyolefins,
wobei die Summe aller Gew.-Teile 100 ergibt

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen oder auch nach dem Schmelzeverfahren.

Diphenole zur Herstellung der aromatischen Polycarbonate und/oder aromatischen Polyestercarbonate sind vorzugsweise solche der Formel (II), 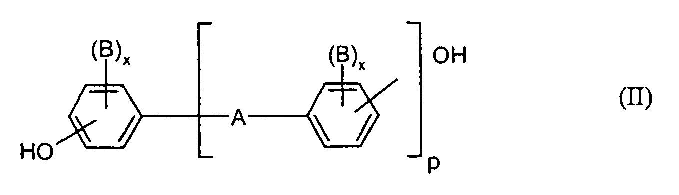 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (III) oder (IV) 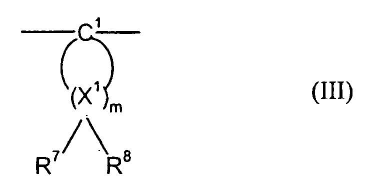 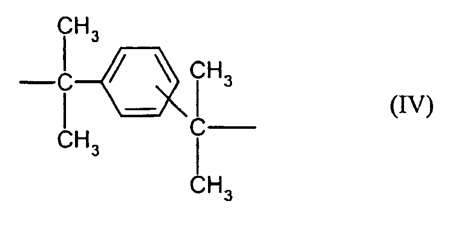
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁷ und R⁸: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R⁷ und R⁸ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-düsopropyl-benzole sowie deren kernbromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%, und 10 mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 mol-% (bezogen auf eingesetzte Dicarbonsäuredichloride) oder 3- öder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die Komponente B umfasst ein oder mehrere Pfropfpolymerisate von
B. 1 5 bis 95, vorzugsweise 30 bis 90 Gew.-%, wenigstens eines Vinylmonomeren auf
B.2 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 5 µm, vorzugsweise 0,10 bis 2 µm, besonders bevorzugt 0,20 bis 1 µm, insbesondere 0,2 bis 0,5 µm.

Monomere B. 1 sind vorzugsweise Gemische aus
B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder (Meth)Acrylsäure-(C₁-C₈)-Alkylester (wie z.B. Methylmethacrylat, Ethylmethacrylat) und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), bevorzugt Butadien-Styrol-Copolymere, mit der Maßgabe, dass die Glasübergangstemperatur der Komponente B.2 unterhalb <10°C, vorzugsweise <0°C, besonders bevorzugt < -10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymerisation oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugernnessung (W. Scholtan, H. Lange, Kolloid, Z. und Z. Polymere 250 (1972), 782-1796) bestimmt werden.

### Komponente C

Die Komponente C umfasst ein oder mehrere thermoplastische Vinyl(co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder (Meth)Acrylsäure-(C₁-C₈)-Alkylester wie z.B. Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-Cg)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte M̅_{w} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

Die erfindungsgemäßen Zusammensetzungen enthalten als Flammschutzmittel oligomere Phosphorsäureester der allgemeinen Formel (Ia) 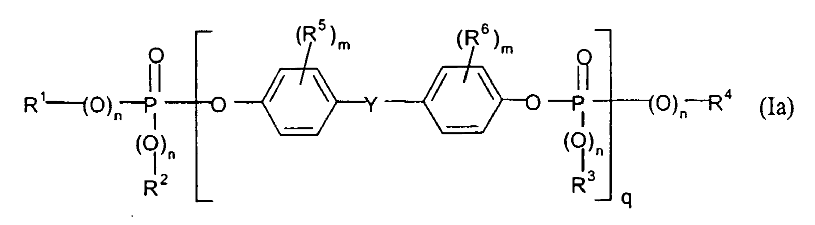 wobei
- R¹, R², R³, R⁴, n und q: die obengenannte Bedeutung haben,
- m: unabhängig voneinander 0, 1, 2, 3 oder 4,
- R⁵ und R⁶: unabhängig voneinander C₁ bis C₄-Alkyl, vorzugsweise Methyl oder Ethyl und
- Y: C₁ bis C₇-Alkyliden, C₁-C₇-Alkylen, -O-, -S-, -SO₂ oder -CO-, vorzugsweise Isopropyliden oder Methylen, bedeuten.

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

### Komponente E

Die erfindungsgemäßen Zusammensetzungen enthalten kalzinierten Talk. Dieser kann erhalten werden durch Kalzinierung von Talk, d.h. thermischer Behandlung bei hohen Temperaturen, bevorzugt bei Temperaturen > 1000°C, in bekannter Art und Weise. Zum besseren Kontakt mit dem Polymer kann der kalzinierte Talk oberflächenbehandelt, z.B. silanisiert werden. Kalzinierter Talk ist käuflich erhältlich, z.B. von Nippon Talc K.K., Japan, oder Hayaslie Kasei K.K., Japan.

Kalzinieren bedeutet, dass Talk im Allgemeinen bei Temperaturen über 900°C nach und nach seine Hydroxylgruppen verliert und sich bei Temperaturen über 1050°C rekristallisiert zur Form des Enstatite, einem wasserfreien Magnesiumsilikat der Formel Mg₂[Si₂O₆]. Der kalzinierte Talk gemäß Komponente E) enthält daher wenigstens einen ausgewählt aus Enstatite und dehydroxyliertem Talk.

### Komponente F

Die Flammschutzmittel entsprechend Komponente D werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 60 Gew.-%.

Die Mengenangabe der fluorierten Polyolefine bezieht sich auf die absolute Menge an fluoriertem Polyolefin.

### Komponente G (Weitere Zusätze)

Die erfindungsgemäßen Zusammensetzungen können weiterhin wenigstens eines der üblichen Additive, wie Gleit- und Entformungsmittel, beispielsweise Pentaerythrittetra-stearat, Nukleiermittel, Antistatika, Stabilisatoren, und weitere Füll- und Verstärkungsstoffe sowie Farbstoffe und Pigmente enthalten.

Die erfindungsgemäßen Zusammensetzungen können bis zu 35 Gew.-%, bezogen auf die Gesamt-Zusammensetzung, eines weiteren, gegebenenfalls synergistisch wirkenden Flammschutzmittels enthalten. Beispielhaft werden als weitere Flammschutzmittel Silikone, organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt.

Die Summe der Gew.-% aller Komponenten ergibt 100.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetem, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und - außenteile.

Insbesondere können die erfindungsgemäßen Zusammensetzungen beispielsweise zur Herstellung von folgenden Formkörpern oder Formteilen verwendet werden:

Innenausbauteile für Schienenfahrzeuge, Schiffe, Flugzeuge, Busse und Automobile, Radkappen, Gehäuse von Kleintransforrnatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Karosserieteile für KFZ, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

### Beispiele

Die in der Tabelle 1 angegebenen und nachfolgend kurz erläuterten Komponenten werden auf einer ZSK-25 bei 240°C compoundiert. Die Formkörper werden auf einer Spritzgießmaschine Typ Arburg 270 E bei 240°C hergestellt.

### Komponente A

Lineares Polycarbonat auf Basis Bisphenol A mit einer relativen Lösungsviskosität von 1,24, gemessen in CH₂Cl₂ als Lösungsmittel bei 25°C und einer Konzentration von 0,5 g/100 ml.

### Komponente B

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuks (mittlerer Teilchendurchmesser d₅₀ = 0,3 µm), hergestellt durch Emulsionspolymerisation.

### Komponente C

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

### Komponente D

### Bisphenol-A-basierendes Phosphat

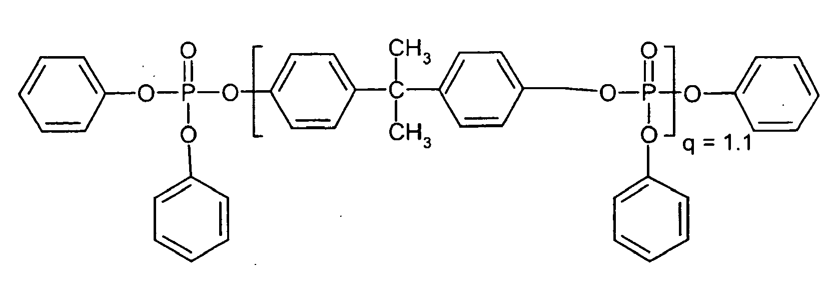

Zur Bestimmung des mittleren q-Wertes wurden zuerst die Anteile der oligomeren Phosphate durch HPLC-Messungen bestimmt:

| | |
|---|---|
| Säulentyp: | LiChrosorp RP-8 |
| Elutionsmittel im Gradienten: | Acetonitril/Wasser 50:50 bis 100:0 |
| Konzentration: | 5 mg/ml |

Aus den Anteilen der einzelnen Komponenten (Mono- und Oligophosphate) wurden dann nach bekannten Verfahren die zahlengewichteten Mittelwerte berechnet.

### Komponente E1

Chlorit-Talk mit einem Chloritanteil von 20 Gew.-% und einem mittleren Teilchendurchmesser d₅₀ =2,0 µm.

### Komponente E2

Kalzinierter Talk (hergestellt aus E1 durch Kalzinierung bei 1000°C).

### Komponente F

Tetrafluorethylenpolymerisat als koagulierte Mischung aus einer Pfropfpolymerisat-Emulsion gemäß oben genannter Komponente B in Wasser und einer Tetrafluorethylenpolymerisat-Emulsion in Wasser. Das Gewichtsverhältnis Pfropfpolymerisat B zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%; der mittlere Teilchendurchmesser liegt zwischen 0,05 und 0,5 µm. Die Pfropfpolymerisat-Emulsion besitzt einen Feststoffgehalt von 34 Gew.-%.

Die Emulsion des Tetrafluorethylenpolymerisats (Teflon® 30 N von DuPont) wird mit der Emulsion des Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente G1

Pentaerithrithtetrastearat (PETS) als Entformungsmittel

### Komponente G2

Phosphitstabilisator

### Untersuchung der Eigenschaften der erfindungsgemäßen Formmassen

Die Bestimmung der Schlagzähigkeit aₙ wird gemäß ISO 180/1 U durchgeführt.

Zur Ermittlung der Bindenahtfestigkeit wird gemäß ISO 179/leU die Schlagzähigkeit an der Bindenaht von beidseitig angespritzten Prüfkörpern der Dimension 170 x 10 x 4 mm gemessen.

Das Brandverhalten der flammwidrigen Proben wurde nach UL-Subj. 94 V an Stäben der Abmessung 127 x 12,7 x 0,8 mm gemessen.

Die Bestimmung der Wärmeformbeständigkeit nach Vicat B erfolgt gemäß ISO 306 an Stäben der Abmessung 80 x 10 x 4 mm.

Die Bestimmung der Schmelze-Viskosität erfolgt nach DIN 54 811 bei der Scherrate von 1000 s⁻¹ und der Temperatur 260°C.

Die Farbstabilität wird bestimmt nach ASTM D 4459, wobei Platten aus dem Material für insgesamt 300 h einer definierten UV-Bestrahlung ausgesetzt werden und die Farbartänderungen delta E nach Belichtungszeiten von 150 h und 300 h relativ zum Ausgangswert spektralphotometrisch bestimmt werden.

**Tabelle 1 Formmassen und ihre Eigenschaften**

| | 1 (Vgl) | 2 |
|---|---|---|
| **Komponenten [Gew.-Tle]** | | |
| A (PC) | 63,2 | 63,2 |
| B (Pfropf) | 4,9 | 4,9 |
| C(SAN) | 4,9 | 4,9 |
| D (BDP) | 12,8 | 12,8 |
| E1 (Talk) | 9,8 | - |
| E2 (kalzinierter Talk) | - | 9,8 |
| F (PTFE-Masterbatch) | 3,9 | 3,9 |
| G1 (PETS) | 0,4 | 0,4 |
| G2 (Stabilisator) | 0,1 | 0,1 |

| **Eigenschaften** | | |
|---|---|---|
| Bindenahtfestigkeit [kJ/m²] | 3,7 | 6,8 |
| Farbstabilität: | | |
| delta E (150 h) | 2,1 | 1,2 |
| delta E (300 h) | 4,1 | 2,9 |
| Viskosität (260°C/1000^{s-1}) [Pas] | 150 | 151 |
| Vicat B 120 | 100 | 100 |
| aₙ[kJ/m²] | 52 | 65 |
| UL 94 V 0,8 mm | V-O | V-O |
| Nachbrennzeit | 38s | 18s |

Aus der Tabelle geht hervor, dass durch den Einsatz von kalziniertern Talk in Kombination mit oligomeren Phosphorsäureestern als FR-Additiv sich PC/ABS-Formmassen erhalten lassen, die sich bei exzellenter Flammwidrigkeit, Fließfähigkeit und Wärmeformbeständigkeit durch verbesserte mechanische Eigenschaften (Zähigkeit und Bindenahtfestigkeit) sowie eine verbesserte UV-Beständigkeit auszeichnen.

## Patentansprüche

1. Mit Pfropfpolymerisat modifizierte Polycarbonat-Zusammensetzungen enthaltend phosphorhaltige Verbindungen der Formel (Ia), 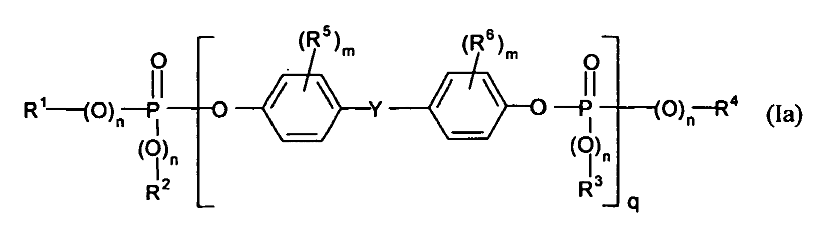 worin
R¹, R², R³ und R⁴, unabhängig voneinander jeweils gegebenenfalls halogeniertes C₁ bis C₈-Alkyl, jeweils gegebenenfalls durch Alkyl, substituiertes C₅ bis C₆-Cycloalkyl, C₆ bis C₂₀-Aryl oder C₇ bis C₁₂-Aralkyl,
n unabhängig voneinander, 0 oder 1
q 0,8 bis 30 und
m unabhängig voneinander 0, 1, 2, 3 oder 4,
R⁵ und R⁶ unabhängig voneinander C₁ bis C₄-Alkyl, vorzugsweise Methyl oder Ethyl und
Y C₁ bis C₇-Alkyliden, C₁-C₇-Alkylen, -O-, -S-, -SO₂ oder -CO- bedeuten.
und kalzinierten Talk.

2. Zusammensetzungen gemäß Anspruch 1 enthaltend
A) 40 bis 99 Gew.-Teile aromatisches Polycarbonat und/oder Polyestercarbonat
B) 0,5 bis 60 Gew.-Teile Pfropfpolymerisat von
B.1) 5 bis 95 Gew.-% eines oder mehrerer Vinylmonomeren auf
B.2) 95 bis 5 Gew.-% einer oder mehrerer Pfropfgrundlagen mit einer Glasumwandlungstemperatur <10°C,
C) 0 bis 45 Gew.-Teile mindestens eines thermoplastischen Polymers ausgewählt aus der Gruppe der Vinyl(co)polymerisate und Polyalkylenterephthalate.
D) 0,5 bis 20 Gew.-Teilen oligomere Phosphorsäureester
E) 0,2 bis 20 Gew.-Teilen kalzinierten Talk und
F) 0 bis 5 Gew.-Teile eines Antitropfmittels,
wobei die Summe aller Gew.-Teile 100 ergibt

3. Zusammensetzung gemäß Anspruch 1, wobei in der Formel (Ia) q für zahlengemittelte Werte von 0,8 bis 20 steht.

4. Zusammensetzung gemäß Anspruch 3, wobei in der Formel (Ia) q für 0,9 bis 10 steht.

5. Zusammensetzung gemäß Anspruch 4, wobei in der Formel (Ia) q für 1 bis 3 steht.

6. Zusammensetzung gemäß einem der Ansprüche 1 bis 5, wobei y in Formel (Ia) Isopropyliden bedeutet.

7. Zusammensetzung gemäß Anspruch 1 enthaltend 50 bis 90 Gew.-Teile A), 1 bis 40 Gew.-Teile B), 0 bis 30 Gew.-Teile C), 1 bis 18 Gew.-Teile D), 0,5 bis 15 Gew.-Teile kalzinierten Talk und 0,1 bis 1 Gew.-Teile F), wobei die Summe aller Gewichtsteile 100 ergibt.

8. Zusammensetzung gemäß Anspruch 2, wobei Komponente B.1 Gemische aus
B.1.1 50 bis 99 Gew.-% mindestens einem Monomeren ausgewählt aus der Gruppe der Vinylaromaten, kernsubstituierten Vinylaromaten und (Meth)Acrylsäure-(C₁-C₈)-Alkylester und
B.1.2 1 bis 50 Gew.-% mindestens einem Monomeren ausgewählt aus der Gruppe der Vinylcyanide, (Meth)Acrylsäure-(C₁-C₈)-Alkylester und Derivate ungesättigter Carbonsäuren sind.

9. Zusammensetzung gemäß Anspruch 8, wobei Monomere B.1.1 ausgewählt sind aus mindestens einem der Monomere Styrol, α-Methylstyrol und Methylmethacrylat und Monomere B 1.2. ausgewählt sind aus mindestens einem der Monomere Acrylnitril, Maleinsäureanhydrid und Methylmethacrylat.

10. Zusammensetzung gemäß Anspruch 2, wobei die Pfropfgrundlage B.2 ausgewählt ist aus mindestens einer aus der Gruppe bestehend aus Dienkautschuken, EP(D)M-Kautschuken, Acrylat-, Polyurethan-, Silikon-, Chloropren- und Ethylen/Vinylacetat-Kautschuken.

11. Zusammensetzung gemäß Anspruch 10, wobei die Pfropfgrundlage B.2 ausgewählt ist aus mindestens einer aus der Gruppe der Dienkautschuke, Butadien/Styrol-Copolymeren und Acrylat-Kautschuken.

12. Zusammensetzung gemäß Anspruch 3, wobei Vinyl(co)polymerisate C) Polymerisate von mindestens einem Monomeren aus der Gruppe der Vinylaromaten, Vinylcyanide, (Meth)Acrylsäure-(C₁-C₈)-Alkylester und ungesättigte Carbonsäuren sowie Derivate ungesättigter Carbonsäuren sind.

13. Zusammensetzung gemäß Anspruch 1, wobei Komponente E) fluorierte Polyolefine sind.

14. Zusammensetzung gemäß Anspruch 1, enthaltend wenigstens ein Additiv ausgewählt aus der Gruppe der Gleit- und Entformungsmittel, Nukleiermittel, Antistatika, Stabilisatoren, weitere Füll- und Verstärkungsstoffe, Farbstoffe und Pigmente.

15. Verwendung der Zusammensetzungen gemäß Anspruch 1 zur Herstellung von Formteilen.

16. Formteile erhältlich aus Zusammensetzungen gemäß Anspruch 1.

## Claims

1. Polycarbonate compositions modified with graft polymer and containing phosphorus-containing compounds having the formula (Ia), 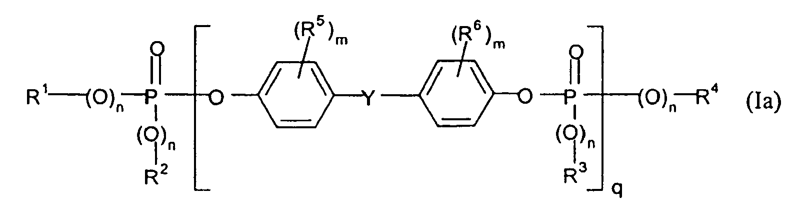 wherein
R¹, R², R³ and R⁴ each mutually independently denote optionally halogenated C₁ to C₈ alkyl, C₅ to C₆ cycloalkyl, C₆ to C₂₀ aryl or C₇ to C₁₂ aralkyl, each optionally substituted by alkyl,
n mutually independently denotes 0 or 1
q denotes 0.8 to 30 and
m mutually independently denotes 0, 1, 2, 3 or 4,
R⁵ and R⁶ mutually independently denote C₁ to C₄ alkyl, preferably methyl or ethyl, and
Y denotes C₁ to C₇ alkylidene, C₁-C₇ alkylene, -O-, -S-, -SO₂ or -CO-,
and calcined talc.

2. Compositions according to claim 1 containing
A) 40 to 99 parts by weight of aromatic polycarbonate and/or polyester carbonate
B) 0.5 to 60 parts by weight of graft polymer of
B.1) 5 to 95 wt.% of one or more vinyl monomers on
B.2) 95 to 5 wt.% of one or more graft bases having a glass transition temperature <10°C,
C) 0 to 45 parts by weight of at least one thermoplastic polymer, selected from the group of vinyl (co)polymers and polyalkylene terephthalates.
D) 0.5 to 20 parts by weight of oligomeric phosphoric acid esters
E) 0.2 to 20 parts by weight of calcined talc and
F) 0 to 5 parts by weight of an anti-dripping agent,
wherein the sum of all parts by weight equals 100.

3. Composition according to claim 1, wherein in the formula (Ia) q stands for number-averaged values of 0.8 to 20.

4. Composition according to claim 3, wherein in the formula (Ia) q stands for 0.9 to 10.

5. Composition according to claim 4, wherein in the formula (Ia) q stands for 1 to 3.

6. Composition according to one of claims 1 to 5, wherein Y in formula (Ia) denotes isopropylidene.

7. Composition according to claim 1 containing 50 to 90 parts by weight of A), 1 to 40 parts by weight of B), 0 to 30 parts by weight of C), 1 to 18 parts by weight of D), 0.5 to 15 parts by weight of calcined talc and 0.1 to 1 parts by weight of F), wherein the sum of all parts by weight equals 100.

8. Composition according to claim 2, wherein component B.1 is a mixture of
B.1.1 50 to 99 wt.% of at least one monomer selected from the group of vinyl aromatics, ring-substituted vinyl aromatics and (meth)acrylic acid (C₁-C₈) alkyl esters and
B.1.2 1 to 50 wt.% of at least one monomer selected from the group of vinyl cyanides, (meth)acrylic acid (C₁-C₈) alkyl esters and derivatives of unsaturated carboxylic acids.

9. Composition according to claim 8, wherein monomers B.1.1 are selected from at least one of the monomers styrene, α-methyl styrene and methyl methacrylate and monomers B.1.2 are selected from at least one of the monomers acrylonitrile, maleic anhydride and methyl methacrylate.

10. Composition according to claim 2, wherein the graft base B.2 is selected from at least one of the group consisting of diene rubbers, EP(D)M rubbers, acrylate, polyurethane, silicone, chloroprene and ethylene/vinyl acetate rubbers.

11. Composition according to claim 10, wherein the graft base B.2 is selected from at least one of the group of diene rubbers, butadiene/styrene copolymers and acrylate rubbers.

12. Composition according to claim 3, wherein vinyl (co)polymers C) are polymers of at least one monomer from the group of vinyl aromatics, vinyl cyanides, (meth)acrylic acid (C₁-C₈) alkyl esters and unsaturated carboxylic acids and derivatives of unsaturated carboxylic acids.

13. Composition according to claim 1, wherein component E) is fluorinated polyolefins.

14. Composition according to claim 1, containing at least one additive selected from the group of lubricants and release agents, nucleating agents, antistatics, stabilisers, additional fillers and reinforcing agents, dyes and pigments.

15. Use of the compositions according to claim 1 for the production of moulded parts.

16. Moulded parts obtainable from compositions according to claim 1.

## Revendications

1. Compositions de polycarbonate modifiées avec un polymère greffé, contenant des composés contenant du phosphore de formule (Ia) 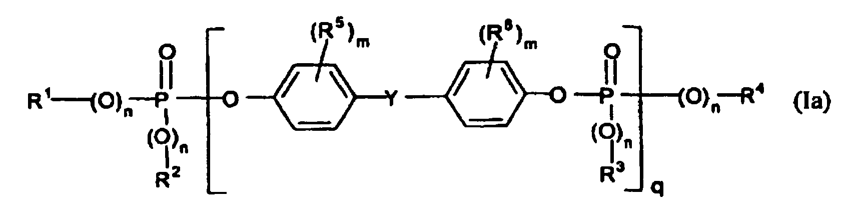 dans laquelle
R¹, R², R³ et R⁴ représentent, indépendamment les uns des autres, alkyle en C₁-C₈ éventuellement halogéné, cycloalkyle en C₅-C₆, aryle en C₆-C₂₀ ou aralkyle en C₇-C₁₂, chacun étant éventuellement substitué par alkyle,
les n sont, indépendamment les uns des autres, 0 ou 1,
q est 0,8 à 30 et
les m sont indépendamment les uns des autres 0, 1, 2, 3 ou 4,
R⁵ et R⁶ représentent indépendamment l'un de l'autre alkyle en C₁-C₄, de préférence méthyle ou éthyle, et
Y est alkylidène en C₁-C₇, alkylène en C₁-C₇, -O-, -S-, -SO₂- ou -CO-,
et du talc calciné.

2. Compositions selon la revendication 1, contenant
A) 40 à 99 parties en masse d'un polycarbonate et/ou polyestercarbonate aromatique,
B) 0,5 à 60 parties en masse d'un polymère greffé de
B1) 5 à 95 % en masse d'un ou plusieurs monomères vinyliques sur
B2) 95 à 5 % en masse d'une ou plusieurs bases de greffage ayant une température de transition vitreuse < 10°C,
C) 0 à 45 parties en masse d'au moins un polymère thermoplastique choisi dans le groupe des (co)polymères vinyliques et des poly(téréphtalates d'alkylène).
D) 0,5 à 20 parties en masse d'esters d'acide phosphorique oligomères
E) 0,2 à 20 parties en masse de talc calciné et
F) 0 à 5 parties en masse d'un agent antigoutte,
la somme de toutes les parties en masse donnant 100.

3. Composition selon la revendication 1, dans laquelle, dans la formule (Ia), q représente des valeurs moyennes en nombre de 0,8 à 20.

4. Composition selon la revendication 3, dans laquelle, dans la formule (Ia), q représente 0,9 à 10.

5. Composition selon la revendication 4, dans laquelle, dans la formule (Ia), q représente 1 à 3.

6. Composition selon l'une des revendications 1 à 5, dans laquelle, dans la formule (Ia), Y représente un isopropylidène.

7. Composition selon la revendication 1, contenant 50 à 90 parties en masse de A), 1 à 40 parties en masse de B), 0 à 30 parties en masse de C), 1 à 18 parties en masse de D), 0,5 à 15 parties en masse de talc calciné et 0,1 à 1 partie en masse de F), la somme de toutes les parties en masse donnant 100.

8. Composition selon la revendication 2, dans laquelle les constituants B.1 sont des mélanges de
B.1.1 50 à 99 % en masse d'au moins un monomère choisi dans le groupe des composés vinyliques aromatiques, des composés vinyliques aromatiques substitués sur le cycle et des esters d'alkyle en C₁-C₈ de l'acide (méth)acrylique et de
B.1.2 1 à 50 % en masse d'au moins un monomère choisi dans le groupe des cyanures de vinyle, des esters d'alkyle en C₁-C₈ de l'acide (méth)acrylique et des dérivés d'acides carboxyliques insaturés.

9. Composition selon la revendication 8, dans laquelle les monomères B.1.1 sont choisis parmi au moins l'un des monomères styrène, α-méthylstyrène et méthacrylate de méthyle et les monomères B 1.2 sont choisis parmi au moins l'un des monomères acrylonitrile, anhydride d'acide maléique et méthacrylate de méthyle.

10. Composition selon la revendication 2, dans laquelle la base de greffage B.2 est choisie parmi au moins l'une du groupe constitué par les caoutchoucs diènes, les caoutchoucs EP(D)M, les caoutchoucs acrylates, polyuréthanes, silicones, chloroprènes et éthylène/acétate de vinyle.

11. Composition selon la revendication 10, dans laquelle la base de greffage B.2 est choisie parmi au moins l'une du groupe constitué par les caoutchoucs diènes, les copolymères butadiène/styrène et les caoutchoucs acrylates.

12. Composition selon la revendication 3, dans laquelle les (co)polymères vinyliques C) sont des polymères d'au moins un monomère du groupe des composés aromatiques vinyliques, des cyanures de vinyle, des esters d'alkyle en C₁-C₈ de l'acide (méth)acrylique et des acides carboxyliques insaturés, ainsi que des dérivés d'acides carboxyliques insaturés.

13. Composition selon la revendication 1, dans laquelle les constituants (E) sont des polyoléfines fluorées.

14. Composition selon la revendication 1, contenant au moins un additif choisi dans le groupe constitué par des lubrifiants et agents de démoulage, des agents de nucléation, des antistatiques, des stabilisants, d'autres charges et agents renforçants, des colorants et des pigments.

15. Utilisation des compositions selon la revendication 1 pour la préparation d'articles moulés.

16. Articles moulés pouvant être obtenus à partir de compositions selon la revendication 1.
